# EUROPÄISCHE PATENTANMELDUNG

(11) **EP 0 887 602 A1**
(43) Veröffentlichungstag der Anmeldung: **30.12.1998**
(21) Anmeldenummer: 98111092.7
(22) Anmeldetag: 17.06.1998
(51) Int. Cl.: F25B 30/02, F25B 41/00

(54) **Wärmepumpe**

(30) Priorität: 28.06.1997 DE 19727535
(71) Anmelder: VIESSMANN WERKE GmbH & CO., 35107 Allendorf/Eder (DE)
(72) Erfinder: Strauss, Rolf-Peter, Dr.-Ing., 35066 Frankenberg (DE)
(74) Vertreter: Wolf, Günter, Dipl.-Ing.

(57) **Zusammenfassung**

Die Erfindung betrifft eine Wärmepumpe, die aus einem Verdampfer (1), einem Verdichter (6), einem Kondensator (3) und einer Drossel (8) besteht. Dabei ist der Verdampfer (1) mit einem Sonnenkollektorkreis (2) und der Kondensator (3) mit einem Verbraucherkreis (4) thermisch gekoppelt. Zur Lösung der Aufgabe, eine Wärmepumpe der eingangs genannten Art mit einfachen Mitteln dahingehend umzugestalten, daß der Aufwand zur Umschaltung zwischen direkter Sonnenenergienutzung und indirekter Nutzung via Wärmepumpe wesentlich reduziert ist, ist erfindungsgemäß vorgesehen, den Verdichter (6) mit einer Bypassleitung (7) zu überbrücken und in der Bypassleitung (7) ein auf Verdampferdruck > Kondensatordruck ansprechendes Rückschlagventil (5') anzuordnen.

## Beschreibung

Die Erfindung betrifft eine Wärmepumpe, bestehend aus Verdampfer, Verdichter, Kondensator und Drossel, wobei der Verdampfer mit einem Sonnenkollektor- und der Kondensator mit einem Verbraucherkreis thermisch gekoppelt sind.

Wärmepumpen werden bekanntlich so betrieben, daß sie Wärmeenergie von einem niedrigen auf ein höheres Temperaturniveau anheben. Als Wärmequelle dient dabei Umgebungsluft oder Erdreich, deren auf ein durch die Pumpe höheres Temperaturniveau gebrachte Wärme dann für Heizungszwecke oder bspw. auch zum Erwarmen von Brauchwasser genutzt wird. Als Umgebungsenergie zur Einspeisung in eine Wärmepumpe eignet sich aber neben Luft-, Erdreich- auch direkt Sonnenenergie, die mit einem Kollektor gewonnen wird. Bei dieser Wärmequelle kann die Temperatur des Wärmeträgers aber auch oberhalb der Nutztemperatur (Heizung/Brauchwasser) liegen. In diesem Fall kann die Wärme direkt zur Beheizung verwendet werden, ohne daß die Wärmepumpe arbeiten muß. Dazu ist es allerdings notwendig, daß der wärmeaufnehmende Verbraucherkreis direkt mit dem Kollektorkreis in Wärmetausch gebracht, d.h., daß er vom Kondensator direkt auf den Kollektor umgeschaltet werden muß. Dazu ist ein relativ aufwendiges Dreiwege-Ventil mit entsprechender Ansteuerung und Regelung notwendig, einschließlich entsprechender Leitungsführungen zwischen Kollektor- und Verbraucherkreis einerseits und dem Dreiwege-Ventil andererseits, das noch mit dem Verdampfer des Warmepumpenkreises in Verbindung stehen muß, was noch an Hand einer diesbezüglichen Vergleichsdarstellung näher erläutert wird.

Der Erfindung liegt demgemäß die Aufgabe zugrunde, eine Wärmepumpe der eingangs genannten Art mit einfachen Mitteln dahingehend umzugestalten, daß der Aufwand zur Umschaltung zwischen direkter Sonnenenergienutzung und indirekter Nutzung via Wärmepumpe wesentlich reduziert ist.

Diese Aufgabe ist mit einer Wärmepumpe herkömmlicher Art nach der Erfindung dadurch gelöst, daß der Verdichter mit einer Bypassleitung überbrückt und in dieser ein auf Verdampferdruck > Kondensatordruck ansprechendes Rückschlagventil angeordnet ist.

Hinsichtlich der Bypass-Überbrückung des Verdichters ist nach der DE 32 20 978 A1 eine Wärmepumpen-Klimaanlage bekannt, die im Kühl- und Heizbetrieb einsetzbar ist. Diese Klimaanlage weist eine Überbrückung des Verdichters auf, die dazu dient einen Teil des vom Verdichter gelieferten Kältemittels bei Heizbetriebsart zur Ansaugseite des Verdichters zurückzufuhren. Diese Überbrückung wird bei Kühlbetriebsart mittels eines Ventils geschlossen. Eine thermische Kopplung an einen Sonnenkollektorkreis ist nach der DE 32 20 978 A1 nicht vorgesehen.

Mit der erfindungsgemäßen Ausbildung wirkt die Wärmepumpe bei nichtlaufendem Verdichter und mit dem in der Bypassleitung angeordneten und geöffneten Ventil als direkter Wärmetransporteur zwischen Kollektor- und Verbraucherkreis. Der Bypass ist deshalb notwendig, weil der Verdichter normalerweise den Betriebsmitteldampf nur im Betrieb passieren läßt (Scroll- und Rollkolben-Verdichter) bzw. nur bei entsprechend hoher Druckdifferenz (Hubkolben-verdichter), wodurch die Nutztemperatur verringert wird. Aufwendigere Dreiwege-Ventile und bislang notwendige direkte Vor- und Rücklaufverbindungsleitungen zwischen Kollektor- und Verbrarncherkreis entfallen. Um auch das Ventil und dessen Steuerung so einfach wie möglich zu gestalten, ist dieses erfindungsgemäß als auf Verdampferdruck > Kondensatordruck ansprechendes Rückschlagventil ausgebildet.

Die erfindungsgemäße Wärmepumpe wird nachfolgend anhand der zeichnerischen Darstellung eines Ausführungsbeispieles näher erläutert.

Es zeigt schematisch
- Fig. 1: die Wärmepumpe in Anordnung als Zwischenglied zwischen einem Kollektor- und Verbraucherkreis und
- Fig. 2: zum Vergleich die bisher übliche Anordnung und Verknüpfung einer Wärmpepumpe mit Kollektor- und Verbraucherkreis.

Am grundsätzlichen Aufbau einer Wärmepumpe P ändert sich nichts, d.h., im das Wärmepumpenbetriebsmittel führenden Kreis sind nach wie vor Verdichter 6, Kondensator 3, Drossel 8 und Verdampfer 1 angeordnet.

Unter Bezug auf die Vergleichsfig. 2 und um den Sonnenkollektorkreis 2 mit dem Verbraucherkreis 4 direkt zu koppeln, d.h. dann, wenn die vom Kollektor 2 aufgenommene Wärme ausreicht, um den Verbraucherkreis 4 direkt beheizen zu können, wird die Wärmepumpe P überbrückt und nimmt am Wärmetransport zwischen Kollektor- und Verbraucherkreis nicht mehr teil. Dafür ist ein Dreiwege-Ventil 5'' mit Steuerung St erforderlich, dessen einer Anschluß 9 (Vorlauf) über eine Leitung 10 direkt mit dem Verbraucherkreis 4 in Verbindung steht, der seinerseits rücklaufseitig und, wie dargestellt, direkt über die Leitung 11 mit dem Kollektorkreis 2 verbunden ist. Bei vom Kollektor 2' ausreichend aufgenommener Wärme wird diese also unter Umgehung der Wärmepumpe P via entsprechend geschaltetem Dreiwege-Ventil 5'' und Leitungen 10 direkt zum Verbraucherkreis 4 transportiert.

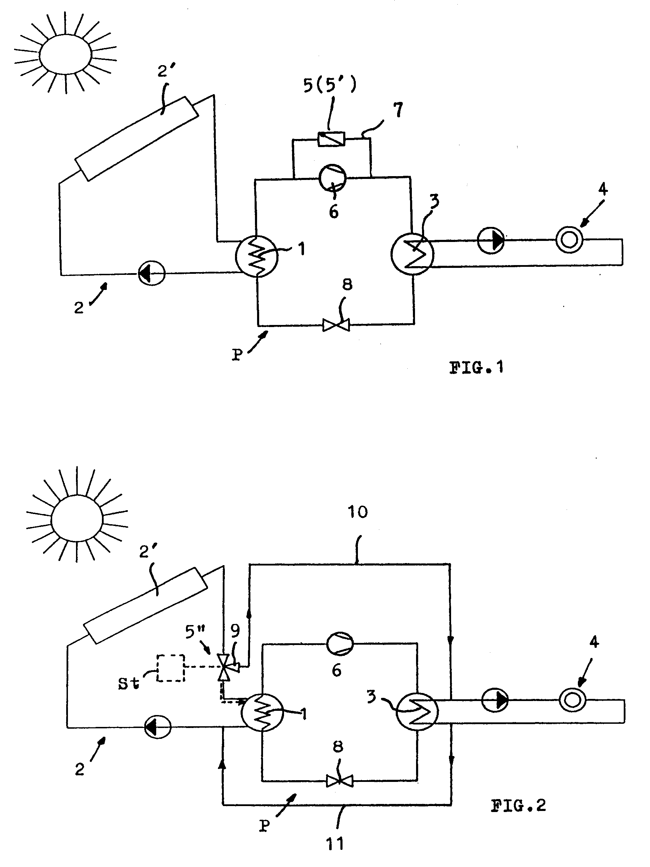

Im Gegensatz dazu und wie dies Fig. 1 deutlich macht, fallen das Dreiwege-Ventil 5'' und die Leitungen 10, 11 mit entsprechenden Leitungsanschlüssen weg, d.h., die Wärmepumpe P nimmt nunmehr via ihrem Betriebsmittel am Wärmetransport vom Kollektor- zum Verbraucherkreis teil, was dank der einfachen Ergänzung des Wärmepumpenkreises mit der Bypassleitung 7 gemäß Fig. 1 ermöglicht wird, die den Verdichter 6 bei geöffnetem Ventil 5 überbrückt. Dieses Ventil 5 ist als einfaches Rückschlagventil 5' ausgebildet, das auf Verdampferdruck > Kondensatordruck anspricht. Bei dieser Lösung ist zu beachten, daß der Druckverlust der geöffneten Bypassleitung möglichst gering ist. Weiterhin sollte die Wärmepumpe P so gestaltet sein, daß der Kondensatumlauf durch Schwerkraft erfolgt. Es sollte auch darauf geachtet werden, daß sich möglichst wenig Kondensat während der reinen Wärmetransport-Funktion im Verdichter sammelt (z.B. durch Anordnung in der Nähe des Verdampfers > höhere Temperatur als der Kondensator), oder es ist für eine ausreichend lange Umschaltphase nach Beendigung der reinen Wärmetransport-Funktion der Wärmepumpe zu sorgen, in der das Kondensat aus dem Verdichter 6 verdampfen kann.

## Patentansprüche

1. Warmepumpe, bestehend aus einem Verdampfer (1), einem Verdichter (6), einem Kondensator (3) und einer Drossel (8), wobei der Verdampfer (1) mit einem Sonnenkollektorkreis (2) und der Kondensator (3) mit einem Verbraucherkreis (4) thermisch gekoppelt ist,
**dadurch gekennzeichnet,**
daß der Verdichter (6) mit einer Bypassleitung (7) überbrückt und in dieser ein auf Verdampferdruck > Kondensatordruck ansprechendes Rückschlagventil (5') angeordnet ist.

2. Wärmepumpe nach Anspruch 1,
**dadurch gekennzeichnet,**
daß der Verdichter (6) nahe bei dem Verdampfer (1) angeordnet ist.

3. Wärmepumpe nach Anspruch 1 oder 2,
**dadurch gekennzeichnet,**
daß die Bypassleitung (7) mit einem einen geringen Druckverlust aufweisenden Querschnitt bemessen ist.
